# EUROPEAN PATENT SPECIFICATION

(11) **EP 1 392 145 B1**
(45) Date of publication and mention of the grant of the patent: **16.11.2005**
(21) Application number: 02740669.3
(22) Date of filing: 31.05.2002
(51) Int. Cl.: A47J 31/44

(54) **COFFEE MACHINE PROVIDED WITH A DEVICE TO COOL THE COFFEE WITH WHICH IT IS LOADED**
KAFFEEMASCHINE MIT VORRICHTUNG UM KAFFEE ZU KÜHLEN
MACHINE A CAFE POURVUE D'UN DISPOSITIF PERMETTANT DE REFROIDIR LE CONTENU DE CAFE

(30) Priority: 08.06.2001 IT MI20011218
(43) Date of publication of application: 03.03.2004
(73) Proprietor: ILLYCAFFE' S.p.A., I-34147 Trieste (IT)
(72) Inventor: SUGGI LIVERANI, Furio, Illycaffé S.p.a., I-34147 Trieste (IT); SAVONITTI, Oriana, Illycaffé S.p.a., I-34147 Trieste (IT); DELLAPIETRA, Bruno, Illycaffé S.p.a., I-34147 Trieste (IT); COSSETTO, Stefano, Illycaffé S.p.a., I-34147 Trieste (IT); CAPPUCCIO, Roberto, I-34100 Trieste (IT)
(74) Representative: Ferraiolo, Rossana
(86) International application number: PCT/EP2002/005957
(87) International publication number: WO 2002/100225

(56) References cited:
- FR-A- 2 708 185
- US-A- 4 624 395
- US-A- 5 836 169
- US-B1- 6 192 785

## Description

The present invention concerns a coffee machine provided with a device to cool the coffee with which it is loaded.

The technical field of the invention involves the problem of maintaining the coffee loaded in a coffee machine at a temperature that will slow down the degeneration of the coffee before it is sent to the extraction chamber. Extraction chamber is here to be understood as the part of the coffee machine in which the drink is actually percolated.

By way of preliminary it should be clarified that, in accordance with the description, coffee loaded in a coffee machine is here to be understood as the coffee loaded into a compartment, situated in an appropriate part of said machine, in the form of as individual packages of coffee, commonly known as pods, capsules or cartridges. These individual packages contain one or more doses of ground coffee suitable for providing one or more cups of coffee. These individual packages, moreover, can either be single packages in a container or single packages contained - in a known manner - in a strip.

Said compartment is to be understood as any compartment, box or container suitable for containing a quantity of said ground coffee packages either singly or in strips.

The pod is a dose of coffee compressed between two layers of water permeable paper through which water can permeate and generally presents itself in the form of a disk having a thickness of a few millimetres and surrounded by a crown consisting of the two layers of paper welded together; the capsule and the cartridge are doses contained in a wrapping that is generally of the form of a truncated cone or a cylinder or a disk made of plastic material or aluminium foil and becomes holed on the upper and lower walls when the capsule or cartridge is introduced into the extraction chamber, so that the water can pass through the coffee content.

The prior art does not comprise an espresso coffee machine loaded with coffee in the form of individual packages and provided with cooling means for actively cooling the coffee and dragging means for moving the coffee along a duct from the loading compartment to the extraction chamber.

The principal disadvantage of the known coffee machines is that the coffee with which they are loaded suffers from the nearness of the extraction chamber, which may be either permanently or occasionally hot, and the heater, which has a very high temperature. This causes a raising of the humidity content and the heating of the coffee loaded in the machine and therefore a more rapid decay of the coffee.

Document US 4,624,395 is known that discloses a machine depending a hot bevarage from a concentrate. The machine comprises a bevarage concentrate container located within a refrigerated compartment. A first valve controls the flow of concentrate from the container once the latter is placed in an inverted position within the compartment and a second valve regulates the flow of hot water to a mixer wherein the concentrate has been deliverd. No doubt, the above machine is not adapted to brew a conventional coffee beverage known as espresso. Another machine with cooling means is known from document EP5836169.

The machine in accordance with the present invention as defined in claim 1 obviates the aforesaid disadvantage and, as characterized in the claims hereinbelow, comprises cooling means to actively cool the coffee loaded in a loading compartment and in the vicinity of the extraction chamber, means for dragging the coffee from the loading compartment to the extraction chamber and means for dissipating the heat generated by said cooling means.

We speak of "actively cooling" the coffee in order to convey the idea that said means produce cold and are not simply means, like fans or similar devices, that keep the coffee fresh by ventilating it.

Said cooling means for actively cooling the coffee loaded in a coffee machine can be known and conventional refrigeration units, appropriately sized on the basis of the characteristics of each particular coffee machine, said machines comprising a thermally insulated compartment into which the coffee is loaded, while in a preferred embodiment of the coffee machine said cooling means comprise: at least one cooling element functioning on the basis of the Peltier effect and having a cold surface that is in contact with the interior of said compartment and a hot surface that is turned towards the outside; at least one radiant plate, situated outside said compartment, and at least one first fan to dissipate the heat generated by said cooling means outside the compartment or the coffee machine.

In the preferred embodiment said radiant plate absorbs heat by conduction from the hot surface of said Peltier cell and dissipates it outside the compartment, said radiant plate being cooled by said first fan.

The preferred embodiment may also comprise at least one cold body extending from the cold surface of Peltier cell to facilitate the cooling of the air contained therein. Said cold body is conventionally called by this name since, being in contact with the cold surface of the Peltier cell, it always remains cold.

Furthermore, at least one second fan may be associated with said cold body to facilitate the circulation of the air cooled by said cold body within said compartment.

The advantage of the machine in accordance with the present invention is that, maintaining at a low temperature the coffee in the form of individual packages within the coffee machine, the decay of the product is slowed down, thus obtaining a better conservation of the organolectic characteristics of the product to be extracted and therefore also a better quality of the product after the percolation.

In fact, the applicant has carried out comparative tests of the instrumental and the organolectic type to verify the difference between the aromatic charge present in the coffee in a prior art machine and in a machine in accordance with the present invention, noting that in the latter case the loaded coffee may remain for a longer period of time without any substantial loss of aromatic charge.

It will readily be understood that the temperature within the loading compartment win depend on the following characteristics:
- size of the coffee container and the material from which it is made;
- size and position of the cooling element;
- quantity of the cooling elements employed;
- type of insulating material employed;
- insulation modality;
- quantity and size of said cooling body and said radiant plate.

The invention will now be described in greater detail by reference to a number of embodiments and with the help of schematic drawings of which:
Figure 1 is a first vertical cross-section view;
Figure 2 is a first partially exploded view;
Figure 3 is a vertical perspective view;
Figure 4 is a second vertical cross-section view; and
Figure 5 is a third vertical cross-section view.

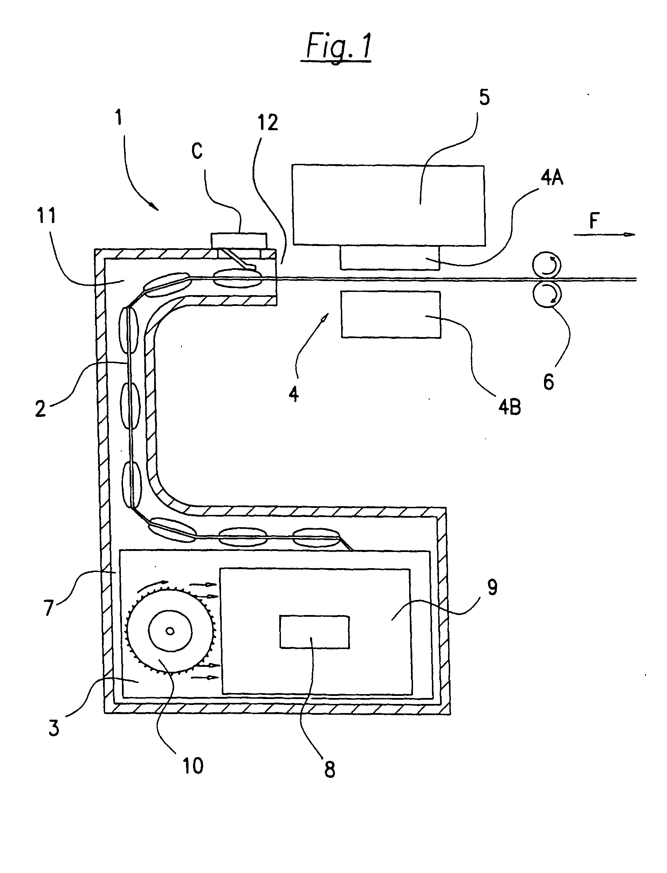

Figure 1 shows the essential parts of a coffee machine 1. The reference number 2 indicates a conventional strip of pods containing a number of individual coffee packages 33; 3 indicates a conventional container of the strip of pods; 4 indicates a conventional extraction chamber in which 4A and 4B are, respectively, the fixed head and the mobile head; C indicates a conventional pod counter; 5 indicates a conventional heat exchanger capable of instantaneously heating the water contained in a receptacle not shown on the drawing and 6 indicates conventional wheels for dragging the pod strip. Furthermore, the figure shows a loading chamber 7 for the container 3 of the pod strip 2, a Peltier cell 8, a finned cold body 9 and a fan 10 outside the container 3 to cool the environment of compartment 7 and therefore also the coffee, the details of which will be explained with reference to the subsequent figures. Said loading compartment 7 contains the container 3 of the pod strip 2 and extends into a kind of duct 11 having the form of an upside-down "L" that terminates adjacent to said extraction chamber 4. An operator initially pulls the end of pod strip 2 out of the container and passes it through said duct 11 until it projects from the duct's open end 12 adjacent to the extraction chamber, eventually engaging it with the dragging wheels 6. When the machine is in operation, the dragging wheels - in a known manner - will cause the strip to advance in the direction of the arrow P until a pod of the strip becomes positioned in the extraction chamber, at this point the mobile head 4B is made to rise until it comes to butt against the fixed head 4A to permit the percolation of the drink.

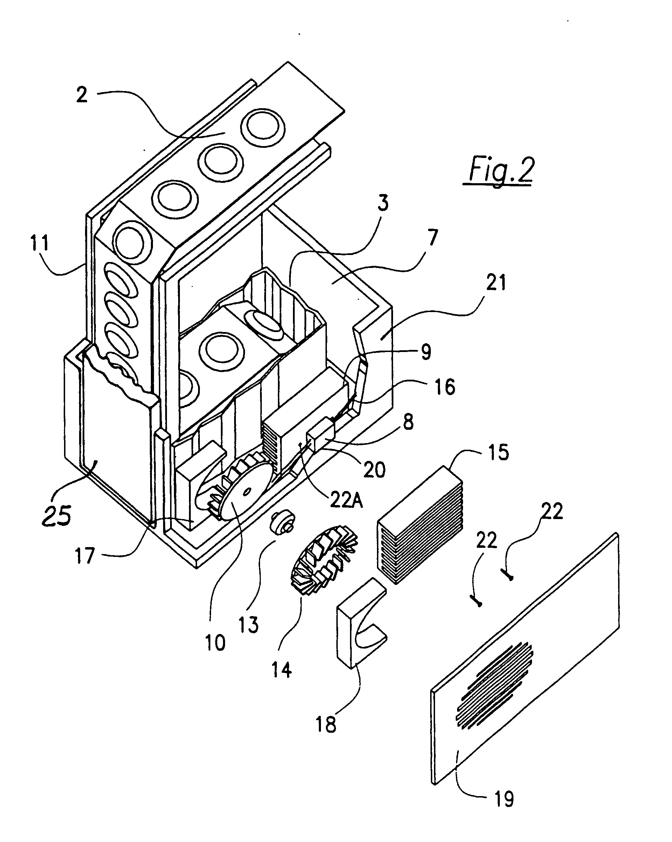

Figure 2 shows the pod strip 2 partially contained in its container 3 within the loading compartment 7 and inserted in duct 11 (defined by the wall element 25, a part of which can be seen in the figure) with its end already projecting from the duct. This figure shows the details of the Peltier cell 8, the cold body 9 and the fan 10 already shown in Figure 1. The figure also shows (as an exploded view for better comprehension) a second fan 14 coaxial with fan 10, a radiant plate 15, an electric motor 13 to operate said fans 10 and 14, supply cables 16 of the Peltier cell and the electric motor, the semi-guard-rings 17 and 18 of said fans and a gridded protection mask 19. The Peltier cell 8 is housed in an appropriate opening 20 of the wall 21 and in such a way that its cold surface will be within the compartment and its hot surface outside thereof. The cold body 9 is attached to said cold surface of the Peltier cell 8 so that with its fins it will form a cold extension inside the compartment 7; the radiant plate 15 is fixed to the hot surface of said cell to absorb the heat and dissipate it outside the compartment and is fixed to the cold body 9 by means of the screws 22 that engage with the holes 22A via through holes in the wall 21 that are not shown in the figure. The fan 10 causes air to circulate inside the compartment 7, said air thus becoming cooled in contact with the cold body 9 and distributed throughout the compartment and also along of the duct 11 to maintain all the pods of the strip at a low temperature, including those close to the extraction chamber 4 (not shown). Fan 14 gathers the air from outside compartment 7 and sends it onto the radiant plate 15, thus cooling the latter and facilitating the heat dissipation.

It will be understood that compartment 7 will be appropriately protected by insulating material that for simplicity of representation is not shown in the figure.

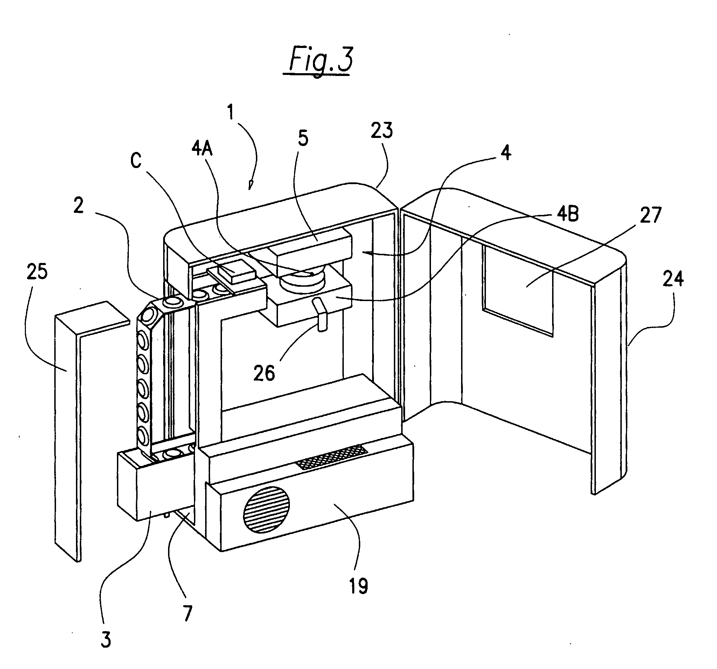

The various parts in Figure 3 are indicated by the same reference numbers that the corresponding parts bear in the previous figures. Figure 3 provides a schematic view of the coffee machine 1 of Figure 1 inserted in its casing 23. The front door 24 is open and the wall element 25 that defines the duct of compartment 7 is shown detached from its actual position. The container 3 is shown not yet completely inserted in the loading compartment 7 and one of the ends of the pod strip 2 is already pulled out to a position adjacent to the extraction chamber, ready to be engaged with the dragging wheels (not shown in the figure). In this figure the Peltier cell, the cold body, the radiant plate, the fans, the electric motor and the semi-guard-rings (all shown in Figure 2) are in their respective working positions and covered by the gridded protection mask 19. The figure also shows a nozzle 26 associated with the mobile head 4B of the extraction chamber, said nozzle projecting through the opening 27 of the front door 24 to provide the drink.

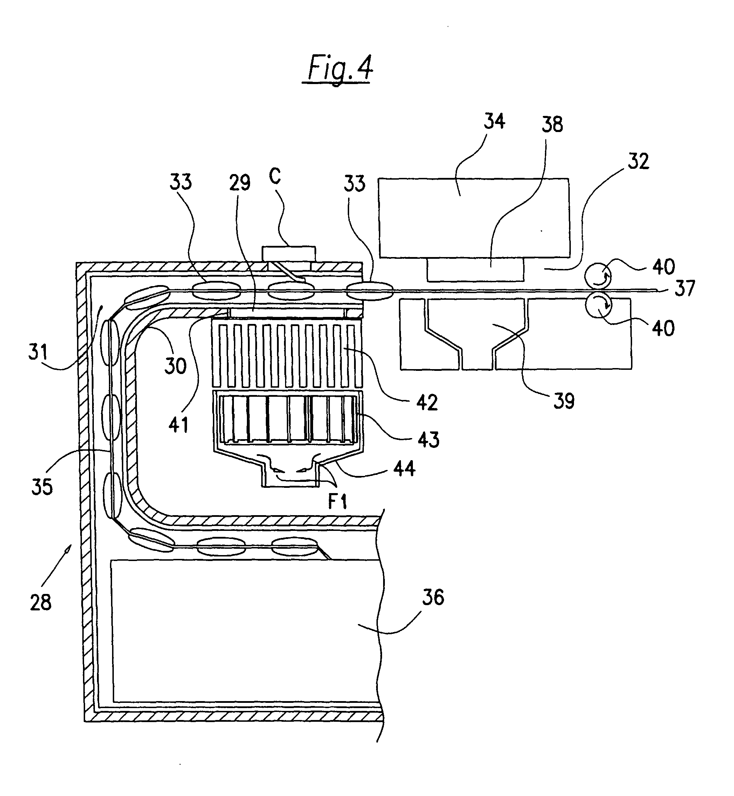

Figure 4 shows part of a coffee machine 28 altogether similar to the one shown in the previous figures, but in which the Peltier cell 29 is associated with the lower wall 30 of the upper end of the duct 31 adjacent to the extraction chamber 32 to maintain at a low temperature the pods 33 closest to the extraction chamber 32 and therefore also the heat exchanger 34. The end 37 of the pod strip is engaged with the dragging wheels 40 as explained in Figure 1. The Peltier cell 29 is housed in an opening 41 of said wall 30 in such a way that its cold surface is inside the duct 31 and its hot surface outside thereof. A radiant plate 42 is associated with the hot surface of said cell to dissipate the heat outside the duct. A cooling fan 43 removes the heat from the radiant plate to send it - in the direction of the arrows F1 - to the outside of the distributor by means of the duct 44.

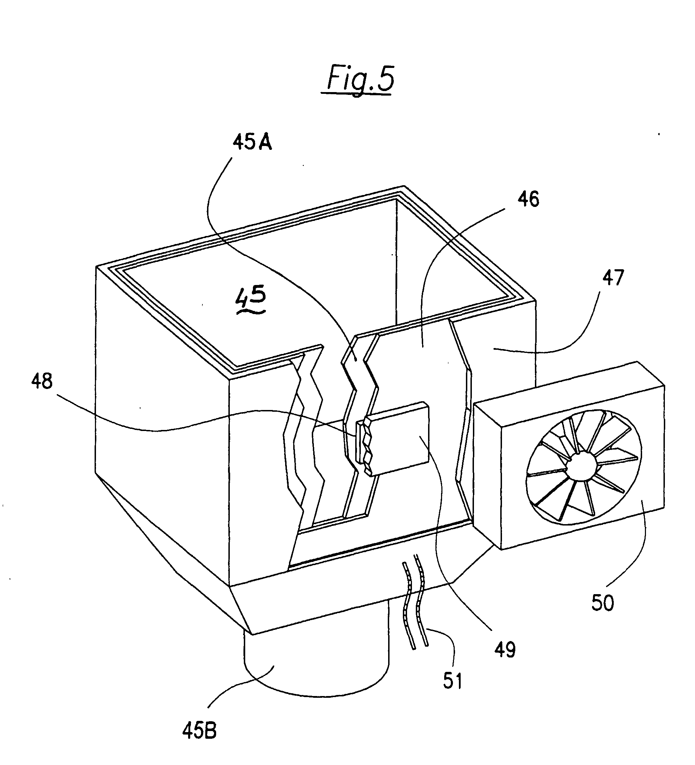

Figure 5 shows a loading compartment 45 for loose ground coffee or loose coffee beans (the coffee not being shown in the figure) that by means of the duct 45B is associated in a known manner with the upper part of a coffee machine below said compartment, the machine being likewise not shown in the figure. The wall 45A of said compartment 45 is lined by a layer of heat-conducting material 46 and a layer of insulating material 47. Furthermore, the reference number 48 indicates a Peltier cell, 49 indicates a radiant plate and 50 a cooling fan. The cold surface of the Peltier cell 48 is in contact with said layer of heat-conducting material 46 to maintain the coffee contained in said compartment 45 at a low temperature. Associated with the hot surface of the Peltier cell there is the radiant plate 49 and said cooling fan 50 (which in the figure is shown away from its working position) is mounted adjacent to the radiant plate in order to facilitate the heat dissipation. The figure also shows the cables 51 that feed said Peltier cell as passing under the layer of heat conducting material 46.

## Claims

1. Coffee machine (1, 28) provided with a loading compartment (7) that may be loaded with coffee in the form of individual packages (33) and comprises cooling means (8, 29, 48) for actively cooling the coffee in the loading compartment and means (14, 43, 50) for dissipating the heat generated by said cooling means, the loading compartment (7) extending into a duct (11, 31) that terminates to the coffee extraction chamber (4) and comprises dragging wheels (6) for moving the coffee along said duct from the loading compartment to the extraction chamber.

2. Coffee machine according to claim 1 **characterised in that** the cooling means are located for cooling the coffee moving along said duct (11, 31).

3. Coffee machine according to claims 1 and 2 **characterised in that** the individual packages (33) are contained in a strip (2) loaded in said compartment (7) and movable by the dragging wheels (6) along said duct (11, 31) step by step until a package after other is received in the extraction chamber (4).

4. Coffee machine according to claims 1 and 2 **characterised in that** the individual coffee packages (33) are stacked in the loading compartment (7) shaped as an elongated box and one individual package (33) after other is movable by the dragging wheels (6) along said duct until a coffee package is received in the extraction chamber (4).

5. Coffee machine in accordance with claims 1-4, **characterised in that** said cooling means are one or more refrigerating units.

6. Coffee machine in accordance with claim 5, **characterised in that** said cooling means are at least one Peltier cell (8, 29, 48) of which the cold surface is in contact with the interior of the loading compartment (7, 45) and of the duct (31) and the hot surface is turned towards the outside of said loading compartment and duct.

7. Coffee machine in accordance with claim 6 **characterized in that** said Peltier cell (8, 29, 48) is associate with at least one radiant plate (15, 42,49) outside the loading compartment, said plate being associated with at least one first fan (14, 43, 50) to dissipate the heat outside said loading compartment.

8. Coffee machine in accordance with claim 6, **characterised in that** said Peltier cell (8, 29, 48) is associated with at least one cold body (9) that extends from the cold surface of said cell (8, 29, 48) to inside the loading compartment (7) to facilitate the cooling of the air inside the compartment.

9. Coffee machine in accordance with claims 6-8, **characterised in that** a second fan (10) facilitates the circulation inside the loading compartment of the air cooled by said cold body (9).

## Patentansprüche

1. Kaffeemaschine (1, 28), die mit einem Füllabteil (7) versehen ist, das mit Kaffee in Form von Einzelpackungen (33) gefüllt werden kann und die eine Kühleinrichtung (8, 29, 48) zum aktiven Kühlen des Kaffees in dem Füllabteil und Mittel (14, 43, 50) zum Verbrauchen der Wärme, die durch die Kühleinrichtung erzeugt wird, aufweist, wobei das Füllabteil (7) sich zu einer Leitung (11, 31) verlängert, die an der Kaffeeextraktionskammer (4) endet und Zugräder (6) zum Bewegen des Kaffees entlang der Leitung vom Füllabteil bis zur Extraktionskammer aufweist.

2. Kaffeemaschine nach Anspruch 1, **dadurch gekennzeichnet, dass** die Kühleinrichtung vorgesehen ist, um den entlang der Leitung (11,31) laufenden Kaffee zu kühlen.

3. Kaffeemaschine nach Anspruch 1 und 2, **dadurch gekennzeichnet, dass** die Einzelpackungen (33) in einem Streifen (2) enthalten sind, der in das Abteil (7) geladen ist und durch die Zugräder (6) entlang der Leitung (11, 31) schrittweise bewegbar ist, bis eine Packung nach der anderen in der Extraktionskammer (4) aufgenommen worden ist.

4. Kaffeemaschine nach Anspruch 1 und 2, **dadurch gekennzeichnet, dass** die einzelnen Kaffeepackungen (33) in dem Füllabteil (7), das als ein lang gestreckter Kasten geformt ist, gestapelt sind und eine Einzelpackung (33) nach der anderen durch die Zugräder (6) entlang der Leitung bewegbar ist, bis eine Kaffeepackung in der Extraktionskammer (4) aufgenommen worden ist.

5. Kaffeemaschine nach Anspruch 1 bis 4, **dadurch gekennzeichnet, dass** die Kühleinrichtung aus einer oder mehreren Kühleinheiten besteht.

6. Kaffeemaschine nach Anspruch 5, **dadurch gekennzeichnet, dass** die Kühleinrichtung wenigstens eine Peltier-Zelle (8, 29, 48) ist, deren kalte Oberfläche mit dem Inneren des Füllabteils (7, 45) und der Leitung (31) in Berührung steht und die heiße Oberfläche zur Außenseite des Füllabteils und der Leitung hin gedreht ist.

7. Kaffeemaschine nach Anspruch 6, **dadurch gekennzeichnet, dass** der Peltier-Zelle (8, 29, 48) wenigstens eine Strahlungsplatte (15, 42, 49) außerhalb des Füllabteils zugeordnet ist, wobei die Platte mit wenigstens einem ersten Gebläse (14, 43, 50) versehen ist, um die Wärme außerhalb des Füllabteils zu zerstreuen.

8. Kaffeemaschine nach Anspruch 6, **dadurch gekennzeichnet, dass** der Peltier-Zelle (8, 29, 48) wenigstens ein kalter Körper (9) zugeordnet ist, der sich von der kalten Oberfläche der Zelle (8, 29, 48) zum Inneren des Füllabteils (7) erstreckt, um das Kühlen der Luft im Inneren des Abteils zu erleichtern.

9. Kaffeemaschine nach Anspruch 6 bis 8, **dadurch gekennzeichnet, dass** ein zweites Gebläse (10) die Zirkulation der durch den kalten Körper (9) gekühlten Luft im Inneren des Füllabteils erleichtert.

## Revendications

1. Machine à café (1, 28)
comportant
un compartiment de chargement (7) pouvant être chargé de café se présentant sous la forme de paquets individuels (33) et comprenant des moyens de refroidissement (8, 29, 48) pour refroidir activement le café dans le compartiment de chargement, ainsi que des moyens (14, 43, 50) pour dissiper la chaleur générée par les moyens de refroidissement, le compartiment de chargement (7) pénétrant dans un conduit (11, 31) qui se termine à l'endroit de la chambre d'extraction de café (4) et comprend des roues d'entraînement (6) pour déplacer le café le long du conduit depuis le compartiment de chargement jusqu'à la chambre d'extraction.

2. Machine à café selon la revendication 1,
**caractérisée en ce que**
les moyens de refroidissement sont placés pour refroidir le café se déplaçant le long du conduit (11, 31).

3. Machine à café selon l'une quelconque des revendications 1 et 2,
**caractérisée en ce que**
les paquets individuels (33) sont contenus dans une bande (2) chargée dans le compartiment (7) et pouvant se déplacer sous l'action des roues d'entraînement (6) le long du conduit (11, 31), étape par étape, jusqu'à ce qu'un paquet après l'autre soit reçu dans la chambre d'extraction (4).

4. Machine à café selon l'une quelconque des revendications 1 et 2,
**caractérisée en ce que**
les paquets individuels (33) sont empilés dans le compartiment de chargement (7) en forme de boîte allongée peuvent se déplacer l'un après l'autre sous l'action des roues d'entraînement (6) le long du conduit, jusqu'à ce qu'un paquet de café soit reçu dans la chambre d'extraction (4).

5. Machine à café selon l'une quelconque des revendications 1 et 4,
**caractérisée en ce que**
les moyens de refroidissement sont constitués d'un ou plusieurs blocs de réfrigération.

6. Machine à café selon la revendication 5,
**caractérisée en ce que**
les moyens de refroidissement sont constitués d'au moins une cellule à effet Peltier (8, 29, 48) dont la surface froide est en contact avec l'intérieur du compartiment de chargement (7, 45) et du conduit (31), tandis que la surface chaude est tournée vers l'extérieur du compartiment de chargement et du conduit.

7. Machine à café selon la revendication 6,
**caractérisée en ce que**
la cellule à effet Peltier (8, 29, 48) est associée à au moins une plaque radiante (15, 42, 49) à l'extérieur du compartiment de chargement, cette plaque étant associée à au moins un premier ventilateur (14, 43, 50) pour dissiper la chaleur à l'extérieur du compartiment de chargement.

8. Machine à café selon la revendication 6,
**caractérisée en ce que**
la cellule à effet Peltier (8, 29, 48) est associée à au moins un corps froid (9) qui s'étend de la surface froide de la cellule (8, 29, 48) jusqu'à l'intérieur du compartiment de chargement (7), pour faciliter le refroidissement de l'air à l'intérieur du compartiment.

9. Machine à café selon l'une quelconque des revendications 6 à 8,
**caractérisée en ce qu'**
un second ventilateur (10) facilite la circulation de l'air refroidi par le corps froid (9) à l'intérieur du compartiment de chargement.
